# EUROPEAN PATENT APPLICATION

(11) **EP 1 592 216 A1**
(43) Date of publication of application: **02.11.2005**
(21) Application number: 04300243.5
(22) Date of filing: 29.04.2004
(51) Int. Cl.: H04M 3/42, H04M 3/02

(54) **Content delivery during call setup**

(71) Applicant: Hewlett-Packard Development Company, L.P., Houston, TX 77070 (US)
(72) Inventor: Caradec, Jean-Philippe, 38180 Seyssins (FR); Franks, Adam, 38530 Chapareillan (FR)
(74) Representative: Lloyd, Richard Graham

(57) **Abstract**

According to one aspect of the present invention, there is provided a system for enabling a caller terminal to establish a call with a callee terminal over a communications network such that usable communications may be entered into between users of each terminal, wherein prior to the call being established a call setup phase is entered in which signaling messages are sent over the network for the purpose of establishing the call, wherein the callee terminal is adapted for receiving content during the call setup phase as indicated in the signaling messages.

## Description

The present invention relates generally to the field of telecommunications, and more particularly to a system and method for enabling a callee terminal to receive content, such as media content, during the call setup phase of a telephony-type call.

At a network level most present-day telephony-type telecommunications involve a call setup phase which precedes the establishment of a call. Call setup includes all of the steps necessary to establish a call between a caller terminal and a callee terminal. A call is said to be established when usable voice or data communications may be exchanged, for example over a voice circuit, between the users of the terminals.

Typically a signaling system is used for performing call setup prior to establishing the call. In traditional fixed-line telephony networks, the well-known signaling system 7 (SS7) is widely used. SS7 networks; comprise a signaling network used to perform call setup, and a separate voice circuit which is created once the call is established.

Even in more recent telecommunications systems, such as session initiation protocol (SIP) networks, a signaling system is used for call setup prior to establishing a call. In SIP networks signaling messages, in the form of SIP messages, are sent over Internet protocol (IP) networks between parties for performing call setup. In SIP there is no separate signaling and voice networks, but only once call setup is complete is the call connected using a voice path established between the parties.

To the casual telephone user, however, the user experience of the telephone has remained largely unchanged for some considerable time, despite the advent of advanced telephony technologies, such as SS7 and SIP.

For example, whenever a caller places a call to a called party, for example by dialing the subscriber number of the called party, the caller hears a ringback tone, provided by the telephony network, output via the telephone handset. If the called party's terminal is on-hook, the called party hears a ring tone generated by the terminal itself. Only when the called party accepts the call, for example by taking the terminal receiver off-hook, is the call said to be established, and until this time, during the call setup phase, no usable voice or data communications may be exchanged between the users of the terminals.

Recent trends have shown that the personalization of consumer goods is increasingly important to consumers, especially in the domain of telephony. For example, huge markets now exist around the personalization of mobile telephones such as by the provision of personalized accessories, such as replacement handset covers and personalized ring tones. These aspects of personalization relate to the physical telephone handsets,

Recently, however, has seen the emergence of so-called ringing-back tones which enable the limited personalization of telephone network features. Ringing-back tones enable a callee to select, through the network provider, a ringback tone which is heard by a caller, during call setup, in place of the traditional monotone ring tone traditionally provided by the network provider. Such ringing-back tones may comprise music, voice messages and the like and may typically be freely chosen by the callee to enable a limited degree of personalization to the caller experience. However, such techniques are limited to instructing the network to replace the usual ringback tone heard by a caller during call setup with a user-defined ringing-back tone.

Accordingly, it is desirable to provide increased levels of personalization to users of telecommunications networks.

Accordingly, one aim of the present invention is to provide a system and method by which a callee may receive content, such as multimedia content, during the call setup phase of a telephony-type call.

According to a first embodiment of the present invention, there is provided a system for enabling a caller terminal to establish a call with a callee terminal over a communications network such that usable communications may be entered into between users of each terminal, wherein prior to the call being established a call setup phase is entered in which signaling messages are sent over the network for the purpose of establishing the call, wherein the callee terminal is adapted for receiving content as indicated in the signaling messages during the call setup phase.

Advantageously this enables a caller, or the network, to offer a personalized callee experience, for example by allowing a caller or a network to cause media content to be received by a callee terminal during call setup. Not only does this open up new content distribution models for telephony-type communications, but also provides network providers with potential additional sources of revenue, whilst at the same time offering the callee a new and personalized experience.

The content indicated in the signaling messages may be determined by the caller terminal, in which case the content may reside on the caller terminal.

The content indicated in the signaling messages may, alternatively, be determined by the communications network, in which case the content may reside in the communications network.

Alternatively, the content may reside on a remote network.

Preferably content received by the callee terminal is output via the callee terminal.

Suitably, where the content is an audio file, the audio file is output via a speaker device of the callee terminal.

Where the content is a video file, the video file is suitable output via a display device of the callee terminal.

The content may be sent to the callee terminal. Alternatively, the content may be streamed to the callee terminal.

Preferably a user profile is provided for blocking the reception of content indicated in the signaling messages as having been determined by a caller terminal not having its subscriber number stored in the user profile.

Suitably, during the call setup phase, a media channel is established between the callee terminal and the location of the content

According to a second aspect, there is provided a method of enabling a caller terminal to establish a call with a callee terminal over a communications network such that usable communications may be entered into between users of each terminal, comprising prior to the call being established entering a call setup phase in which signaling messages are sent over the network for the purpose of establishing the call, and further wherein the callee terminal is adapted for receiving content as indicated in the signaling messages during the call setup phase.

According to a third aspect, there is provided a terminal for operating in accordance with the above described concepts.

Various embodiments of the present invention will now be described, by way of example only, with reference to the accompanying diagrams, in which:
Figure 1 is a block diagram showing an embodiment of the present invention for use with a SS7-type telephone network;
Figure 2 is a block diagram showing a further embodiment for use with a voice over IP (VoIP)-type network;
Figure 3 is a block diagram showing a yet further embodiment for use with a voice over IP (VoIP) type network.

The term 'terminal' used herein relates to any suitable equipment which may be used for making and/or receiving telephony-type calls. For example, a terminal may be a traditional fixed-line telephone handset, a portable radio telephone such as mobile telephone, a SIP phone, a computer or the like.

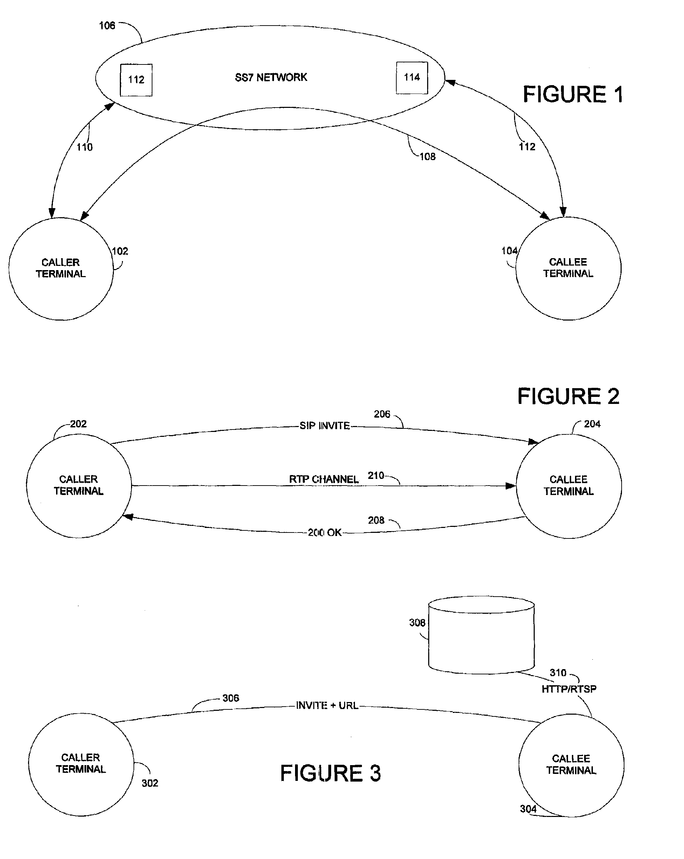

Referring now to Figure 1, there is shown an embodiment of the present invention for use with a traditional telephony network, such as a SS7 or other equivalent common channel signaling network, comprising a caller terminal 102, a callee terminal 104 and a telephony network 106. The caller terminal 102 is connected to an originating switch 112 through a signaling link 110, and the callee terminal 104 is connected to a terminating switch 114 through a signaling link 112. Those skilled in the art will understand the operation of the network signaling and routing involved in contacting the callee terminal 104, and as such this will not be extensively described herein.

The caller terminal 102 under control of a caller (not shown) enters into a call setup phase to attempt to establish a call with the callee terminal 104. This may be achieved, for example, by the caller dialing the subscriber number of the callee terminal 104 in the normal manner. By dialing a subscriber number the caller causes SS7 signaling messages to be sent across the signaling network 106 through signaling links 110 and 112 such that a call connection attempt is made with the callee terminal 104.

The effect of the caller dialing the subscriber number of the callee terminal 104 is to cause a 'trying' message, such as an ISUP Initial Address Message (IAM) to be sent from the originating switch 112 to the terminating switch 114. The IAM message may include a new 'pre-announcement' parameter for indicating to the terminating switch that the caller terminal 102 intends the callee terminal to receive some caller-selected content. Upon receiving this message and determining the presence of the pre-announcement parameter therein the terminating switch 114 responds to the originating switch 112 with an ANM ISUP reply message, even though the callee terminal 104 remains on-hook. The effect of sending the ANM ISUP message causes a voice circuit 108 to be established between the two terminals. However, at this point in time, the call is not considered to be established since no usable voice or data communications may be exchanged between the users of the terminals.

The established circuit 108 enables the two terminals 102 and 104 to exchange data, for example using a modem connection compliant with a suitable standard such as V.34. Data may then be exchanged, for example using a H.223 level 2 multiplexing layer. Finally one or more media channels, such as data, audio or video channels, may be negotiated using, for example, H.245l.

Once the voice circuit 108 has been established the network generated ringback tone heard by the caller will stop. In order to alert the caller that the callee has yet to take the callee terminal 104 off-hook an emulated ringback tone is generated and is sent to the caller terminal using the voice circuit 108. This may be sent, for example, over an audio channel from the callee to the caller.

In traditional TDM networks, the circuit switched establishment is combined with call setup. A call requires a circuit switched for voice exchange and once the call is established, the circuit is opened. However, in the present embodiment these operations are decoupled.

The caller terminal 102 may use an open media channel of the circuit 108 to push the user-selected content to the callee terminal 104. Prior to pushing the content a session negotiation phase may be entered into between the two terminals 102 and 104. For example, the caller terminal may request the callee terminal 104 to provide details of the type of media content which may be accepted by the callee terminal 104. This may includes details of, for example, the screen size of the callee terminal, the number of colors supported by the screen, the maximum refresh rate of the screen, the type of audio formats supported by the callee terminal and so on. The caller terminal 102 may then adapt, in response to the information supplied by the callee terminal 104, the type and format of the content pushed to the callee terminal 104.

Once the circuit 108 is established the callee terminal will not ring, thus the terminating switch or the caller terminal 102 may simulate a ringing tone to be output by the callee terminal 104 to alert the callee that an incoming call is being received. Such a ringing tone may be suitably sent to the callee terminal 104 over an established audio media channel.

Upon receipt of the pushed content the callee terminal 104 outputs the content in the most appropriate manner.

As previously mentioned, the type of the pushed content may vary considerably. For example, if the pushed content is a photo in the form of an image file, once the image file has been received by the callee terminal 104 the caller terminal 102 will stop sending the file and the open voice/data channel 108 is ready to be used by users of the two terminals 102 and 104 as soon as the callee terminal 104 is taken off-hook by the callee.

if, on the other hand, the caller terminal 102 is pushing a streaming video file, the streaming data may last for some considerable time depending on the length of the video clip being pushed. In this case, if the callee takes the callee terminal 104 off-hook whilst receiving the streaming video the callee terminal signals this, via the open voice or data channel 108, to the caller terminal which is adapted to stop pushing the media content and to allow the circuit 108 to be used for voice communications in the normal manner.

If the pushed content is an audio file to be used as the ringing tone generated by the callee terminal 104, the normal callee terminal generated ringing tone is replaced by a ringing tone generated by outputting the audio file.
If the callee terminal has a vibrator for silently alerting the callee of the presence of an incoming call, the content may such that it causes the vibrator to vibrate in accordance with the content.

In general it may be envisaged that the content may relate to any kind of output device or mechanism available on the callee terminal.

The callee terminal 104 may store the received content, for example if the received content is a streaming video clip, and replay the video clip in a loop until such time that the call setup is completed or disconnected.

If the callee does not answer the call after a predetermined time, or actively rejects the call, a disconnect message, such as an ISUP REL message, is sent to the network 106 causing call setup to be stopped and the circuit 108 to be released. Alternatively, the network 106, the caller terminal 102:, or the callee terminal 104 may end the call in a suitable manner after a predetermined delay.

If the callee takes the terminal off-hook, for example by picking up the receiver or by pressing a call answer button, the callee terminal 104 drops the modem connection, which consequently causes the established media channel to dropped thereby stopping any data transmission thereon. The circuit 108 may thus be used as a standard voice circuit enabling the users of the terminals 102 and 104 to communicate in the usual manner using the traditional analogue phone interface.

Alternatively, the callee terminal 104 may stop transmitting any ring back tone and thereby enable the transmission of the callee voice through the already established voice media channel.

The caller preferably selects the content to be pushed to the callee terminal 104 prior to dialing the subscriber number of callee terminal 104. This may be achieved, for example, by accessing an appropriate menu structure provided by the phone, in any known manner.

To help ensure that unsuitable or unwanted content is not received by the callee terminal, a user profile system is preferably provided. For example, the user profile system may contain a data store in which the subscriber numbers of other caller terminals from which the user of the callee terminal 104 is prepared to accept pushed content is stored. The user profile system suitably does not allow pushed content from any caller terminals other than those the subscriber number of which are stored in the user profile. The user profile may be provided in the callee terminal 104 or in the network 106. For example, if the user profile is provided in the network 106 preferably the terminating switch 114 is operable to only accept and act upon a 'pre-announcement' parameter coming from subscriber numbers which are stored in the user profile.

It should be noted that the user of the caller terminal may be billed by the network provider as soon as the voice/data channel 108 is established.

Referring now to Figure 2, there is a shown a further embodiment for use in a SIP network, in which a SIP compatible caller terminal 202 may place a call to an appropriate SIP callee terminal 204 over an Internet protocol network. For clarity it will be appreciated that essential elements of a SIP network, such as SIP proxy servers and the like, required for routing SIP messages, are not shown or discussed herein.

The caller terminal 202, in response to a caller request to make a call to the callee terminal 204, sends a SIP *INVITE* message 206 to the callee terminal 204. The SIP *lNVITE* message includes a new 'pre-announcement' parameter indicating to the callee terminal 204 that the caller terminal 202 wishes the callee terminal 204 to receive some caller-selected content during the call setup phase of the call.

SIP provides for the establishment of media sessions hence the *INVITE* message sent from the caller terminal 202 indudes a session description protocol (SDP) descriptor. The session descriptor gives details of the media session characteristics which are supported by the caller terminal 202. Upon receipt of the *INVITE* message the callee terminal 204 responds by sending a *200 OK* message back to the caller terminal 202. The *200 OK* message contains a session descriptor of the callee terminal 204. The session characteristics may indude characteristics such as supported audio and/or video codecs, screen size, supported bit-rates and so on.

When the caller terminal 202 receives the *200 OK* message it chooses an appropriate session format and establishes a real-time protocol (RTP) channel 210 with the callee terminal 204. The RTP path with the callee terminal 204 is preferably established based on data sent by the callee terminal 204 in the SDP of the *200 OK* message 208. Such information may include a UDP port and an IP address to which the media traffic is to be sent.

The callee terminal automatically outputs the received media content via the callee terminal in the manner described above in relation to the first embodiment.

If the user of the callee terminal 204 takes the callee terminal 'off-hook', such as by pushing an appropriate call answer button, the callee terminal 204 sends a new *INVITE* message to the caller terminal 202. The effect of this is to clear the RTP channel 210 and to stop the caller terminal 202 from sending the selected content to the callee terminal 204. The new *INVITE* message, which in this case does not contain the 'pre-announcement' parameter, once acknowledged by the caller terminal 202, causes the establishment of a new voice path (not shown) between the two terminals, allowing voice communication of the users of the terminals 202 and 204 in the usual way.

If the callee does not answer the call within a predetermined time period the callee terminal may end call setup by sending a BYE message to the caller terminal 202.

Alternatively, the caller terminal 202 may end the call connection request after a predetermined time period by sending a *BYE* message to the callee terminal 204.

Referring now to Figure 3, there is shown a yet further embodiment in which a caller terminal 302 provides, as part of the pre-announcement parameter of a SIP *INVITE* message, a remote network location of content the user of caller terminal 202 wishes to be received by the callee terminal 204 during the call setup phase of the call. The remote network location may, for instance, be indicated in the form of a universal resource indicator (URI).

Upon receipt of this URI, by an Internet-enabled callee terminal, the callee terminal automatically connects to the content pointed to by the URI. For example, the URI may be a HTTP address of an image file or a RTSP address of a streaming video file, stored in a remote server 308 accessible via the Internet or other suitable network. Thus, upon receipt of the URI the callee terminal 304 automatically downloads the content and outputs it via the display device of the callee terminal 304.

In a yet further embodiment, the telecommunications network is adapted to insert an appropriate 'pre-announcement' parameter in an appropriate one of the signaling messages to cause the callee terminal to receive content indicated by the pre-announcement parameter. In this way, if the caller does not choose to send content to the callee terminal during the call setup phase, the network may do so instead. This embodiment may be particularly advantageous to network providers who could use such a facility for causing the callee terminal to receive advertisement material during the call setup phase.

Those skilled in the art will appreciate that the above embodiments are merely exemplary, and will appreciate that other configurations may be used without detracting from the inventive concepts described above.

## Claims

1. A system for enabling a caller terminal to establish a call with a callee terminal over a communications network such that usable communications may be entered into between users of each terminal, wherein prior to the call being established a call setup phase is entered in which signaling messages are sent over the network for the purpose of establishing the call,
wherein the callee terminal is adapted for receiving content during the call setup phase as indicated in the signaling messages.

2. The system of claim 1, wherein the content indicated in the signaling messages is determined by the caller terminal.

3. The system of claim 1 or 2, wherein the content resides on the caller terminal.

4. The system of claim 1, wherein the content indicated in the signaling messages is determined by the communications network.

5. The system of any previous claim, wherein the content resides in the communications network.

6. The system of any previous claim, wherein the content resides on a remote network.

7. The system of any previous claim, wherein the content received by the callee terminal is output via the callee terminal.

8. The system of any previous claim, wherein, where the content is an audio file, the callee terminal is adapted to output the audio file via a speaker device of the callee terminal.

9. The system of any previous claim, wherein, where the content is a video file, the callee terminal is adapted for outputting the video file via a display device of the callee terminal.

10. The system of any previous claim, wherein the content is sent to the callee terminal.

11. The system of any previous claim, wherein the content is streamed to the callee terminal.

12. The system of any previous claim, further comprising a user profile for blocking the reception of content indicated in the signaling messages as having been determined by a caller terminal not having its subscriber number stored in the user profile.

13. The system of any previous claim, further comprising, during the call setup phase, establishing a media channel between the callee terminal and the location of the content

14. A method of enabling a caller terminal to establish a call with a callee terminal over a communications network such that usable communications may be entered into between users of each terminal, comprising prior to the call being established entering a call setup phase in which signaling messages are sent over the network for the purpose of establishing the call,
and receiving, at the callee terminal, content as indicated in the signaling messages during the call setup phase.

15. The method of claim 14, comprising causing the signaling messages to indicate content as determined by the caller terminal.

16. The method of claim 14 or 15, comprising storing the content on the caller terminal.

17. The method of claim 14, comprising causing the signaling messages to indicate content as determined by the communications network.

18. The method of any of claims 14 to 17, further comprising storing the content resides in the communications network.

19. The method of any of claims 14 to 18, further comprising storing the content on a remote network.

20. The method of any of claims 14 to 19, further comprising the callee terminal outputting the received content.

21. The method of claim 20, wherein, where the content is an audio file, the step of outputting the content is adapted for outputting the audio file via a speaker device of the callee terminal.

22. The method of claim 20 or 21, wherein, where the content is a video file, the step of outputting the content is adapted for outputting the audio file via a display device of the callee terminal.

23. The method of any of claims 14 to 22, further comprising sending the content to the callee terminal.

24. The method of any of claims 14 to 23, further comprising streaming the content to the callee terminal.

25. The method of any of claims 14 to 24, further comprising the callee terminal blocking the reception of content indicated in the signaling messages as having been determined by a caller terminal not having its subscriber number stored in the user profile.

26. The method of any of claims 14 to 25, further comprising, during the call setup phase, establishing a media channel between the callee terminal and the location of the content

27. A terminal operating in accordance with any of claims 14 to 26.
